# EUROPÄISCHE PATENTSCHRIFT

(11) **EP 2 050 562 B1**
(45) Veröffentlichungstag und Bekanntmachung des Hinweises auf die Patenterteilung: **26.05.2010**
(21) Anmeldenummer: 08017072.3
(22) Anmeldetag: 27.09.2008
(51) Int. Cl.: B31D 3/00

(54) **Wellpappestreifenwendevorrichtung**
Corrugated cardboard strip reorienting device
Dispositif de réorientation de bandes de carton ondulé

(30) Priorität: 12.10.2007 DE 102007049426
(43) Veröffentlichungstag der Anmeldung: 22.04.2009
(73) Patentinhaber: BHS Corrugated Maschinen-und Anlagenbau GmbH, 92729 Weiherhammer (DE)
(72) Erfinder: Schell, Markus, 92637 Weiden (DE)
(74) Vertreter: Rau, Albrecht

(56) Entgegenhaltungen:
- WO-A-2008/003015
- CH-A5- 688 370

## Beschreibung

Die Erfindung betrifft eine Vorrichtung zur Änderung der Raumorientierung, insbesondere zum Wenden, von Wellpappe-Streifen.

Der Erfindung liegt die Aufgabe zugrunde, eine Vorrichtung zur Änderung der Raumorientierung von Wellpappe-Streifen zu schaffen. Die Aufgabe wird durch die Merkmale des Anspruchs 1 gelöst.

Der Kern der Erfmdung besteht darin, eine Wende-Walze mit auf dem Mantel angeordneten Aufnahme-Einrichtungen zur lösbaren Befestigung von Wellpappe-Streifen vorzusehen. Die Wellpappe-Streifen haften so auf dem Mantel der Wende-Walze, werden beispielsweise um 90° weitergedreht, dann durch eine Abstreif-Einrichtung vom Mantel abgestreift und erhalten so die neue gewünschte Raumorientierung, sind beispielsweise um 90° im Raum gedreht worden.

Vorteilhafte Ausgestaltungen der Erfmdung ergeben sich aus den Unteransprüchen.

Zusätzliche Merkmale und Einzelheiten der Erfindung ergeben sich aus der Beschreibung eines Ausführungsbeispiels anhand der Zeichnungen. Es zeigen
- Fig. 1: eine Seitenansicht einer Vorrichtung zur Herstellung von Waben-Wellpappe,
- Fig. 2: eine Ausschnittvergrößerung der Schneid-Einrichtung gemäß Fig. 1,

- Fig. 3: eine Ansicht entsprechend Fig. 2 mit einem vereinzelten Stapel von Wellpappe-Streifen,
- Fig. 4: eine Draufsicht auf die Vorrichtung gemäß Fig. 1,
- Fig. 5: eine vergrößerte Darstellung der Transport-Einrichtung gemäß Fig. 1,
- Fig. 6: eine vergrößerte Darstellung der Beleimungs-Einrichtung gemäß Fig. 1,
- Fig. 7: eine vergrößerte Ansicht der Wellpappe-Streifen-WendeEinrichtung gemäß Fig. 1,

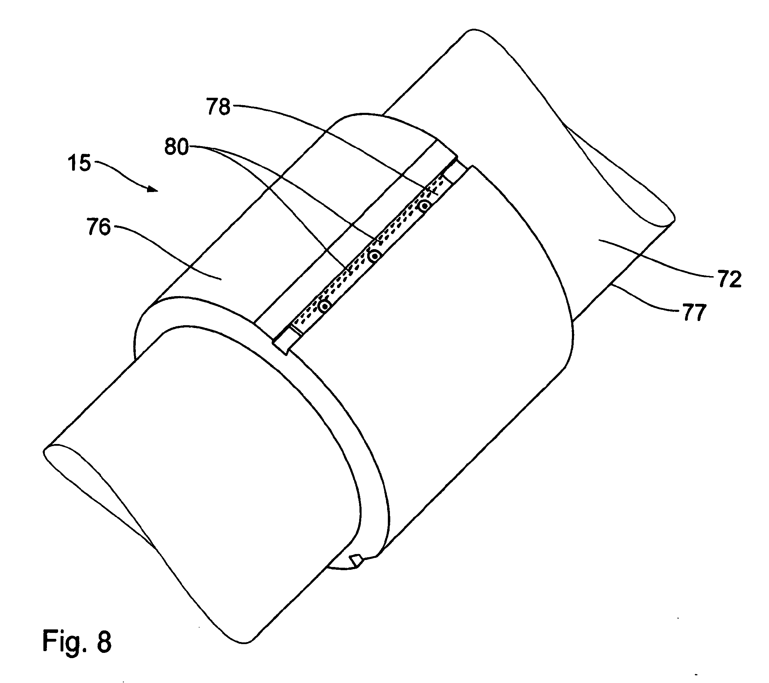

- Fig. 8: eine vergrößerte Ansicht der die Wende-Walze gemäß Fig. 7,

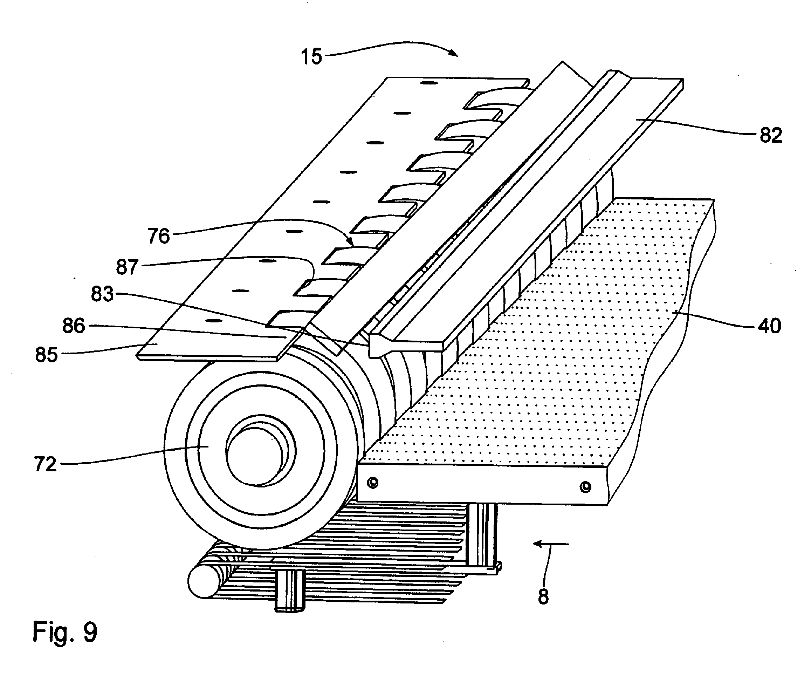

- Fig. 9: eine Ansicht der Wellpappe-Streifen-Wende-Einrichtung gemäß Fig. 7 und
- Fig. 10: ein Stück Waben-Wellpappe.

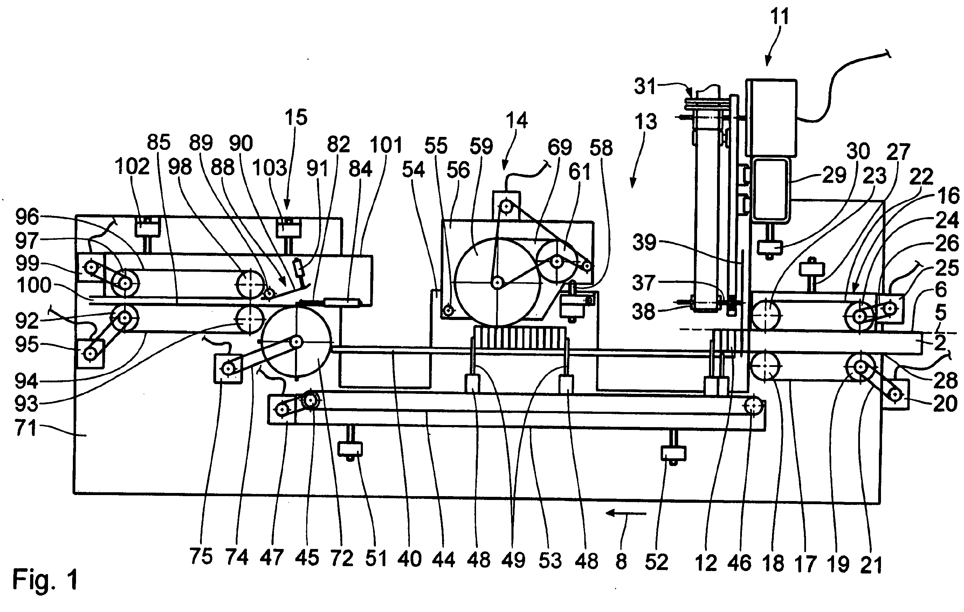

Im Folgenden wird eine Vorrichtung zur Herstellung von Waben-Wellpappe 1 beschrieben. Ausgegangen wird hierbei bei der Vorrichtung gemäß Fig. 1 von einem Block 2 mehrerer aufeinander geklebter, einseitig kaschierter Wellpappe-Bögen. Einseitig kaschierte Wellpappe besteht aus einer korrugierten Wellbahn 3 sowie einer glatten, mit dieser verklebten Deckbahn 4. Die Herstellung einseitig kaschierter Wellpappe in endlosen Bahnen ist bekannt, beispielsweise aus der DE 103 12 600 A1. Innerhalb einer Wellpappe-Anlage können mehrere Lagen einseitig kaschierter Wellpappe aufeinander geklebt werden, so dass eine größere Abfolge von miteinander verklebten Deckbahnen, Wellbahnen, Deckbahnen, Wellbahnen etc. entsteht. Siehe z.B. CH 688 370. Derartige mehrlagige Wellpappe-Bahnen werden zu Bögen, nachfolgend als Blöcke 2 bezeichnet, geschnitten und am Ende der Wellpappe-Anlage gestapelt. Diese Blöcke 2 besitzen als Haupt-Ebene eine Block-Ebene 5, in der die Oberseite 6 des Blocks 2 liegt. Die zwischen der Wellbahn 3 und der Deckbahn 4 gebildeten Kanäle 7 verlaufen parallel zur Block-Ebene 5. Die Blöcke 2, von denen die Vorrichtung gemäß Fig. 1 ausgeht, sind so ausgerichtet, dass die Kanäle 7 parallel zu einer horizontalen, in Fig. 1 von rechts nach links verlaufenden Transport-Richtung 8 verlaufen. Bei der Vorrichtung gemäß Fig. 1 wird beispielsweise von einem Block 2 ausgegangen, der aus fünf abwechselnd übereinander angeordneten Wellbahnen 3 und Deckbahnen 4 besteht.

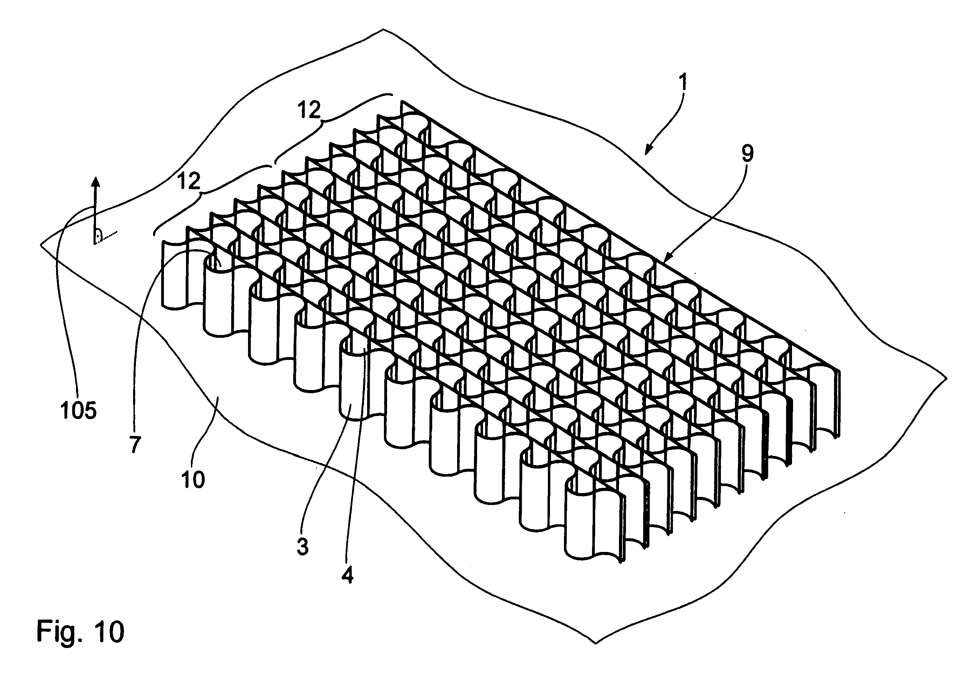

Das mit der Vorrichtung gemäß Fig. 1 erzeugte Produkt wird als Waben-Wellpappe 1 bezeichnet. Es ist beispielhaft in Fig. 10 dargestellt. Die Waben-Wellpappe 1 weist eine planare Oberseite 9 auf, die in der als Waben-Wellpappen-Ebene 10 bezeichneten Haupt-Ebene liegt. Die Waben-Wellpappe 1 ist wesentlich dadurch charakterisiert, dass die Kanäle 7 quer, insbesondere senkrecht zur Ebene 10 verlaufen, wohingegen die Kanäle 7 im Ausgangs-Block 2 parallel zur Block-Ebene 5 verliefen. Der wesentliche Vorteil der Waben-Wellpappe 1 besteht darin, dass sie eine große Steifigkeit in mehrere Raumrichtungen besitzt. Zunächst ist sie besonders stabil gegenüber Krafteinwirkungen senkrecht zur Ebene 10. Darüber hinaus besitzt sie eine gute Steifigkeit bei Biegungen um Achsen, die in der Ebene 10 liegen. Als Waben-Wellpappe 1 im Sinne dieser Anmeldung wird im weitesten Sinne ein zellulares Material verstanden, bei dem die Kanäle 7 quer zur Haupt-Ebene 10 verlaufen. Um eine höhere Beständigkeit der Waben-Wellpappe 1 gegenüber äußeren Einflüssen, wie z. B. Feuchtigkeit, zu erzeugen, kann die Waben-Wellpappe 1 aus mit Kunststoff und/oder Wachs und/oder Imprägniermitteln kaschierten Bahnen 3, 4 bestehen oder die erzeugte Waben-Wellpappe 1 nachträglich mit Kunststoff überzogen werden. Ferner können die Bahnen 3, 4 aus Papier und/oder Kunststoff und/oder glasfaserverstärkten Materialbahnen bestehen. Der Begriff Wellpappe bzw. Block aus Wellpappe im Sinne der Anmeldung ist deshalb im weitestgehenden Sinne so zu verstehen, dass die Bahnen, aus denen die Wellpappe besteht, aus Papier und/oder Pappe und/oder Kunststoff und/oder glasfaserverstärkten Materialbahnen bestehen können. Grundsätzlich sind auch noch andere flexible Materialien, die sich entsprechend verarbeiten lassen, mitumfasst.

Eine, in Fig. 1 dargestellte, Vorrichtung zur Herstellung von Waben-Wellpappe 1 weist entlang der Transport-Richtung 8 hintereinander angeordnet eine Schneid-Einrichtung 11 zum Schneiden von Streifen 12 aus einem Block 2 auf. Der Schneid-Einrichtung 11 nachgeordnet befindet sich eine Transport-Einrichtung 13 zum Transport der Streifen 12 entlang der Richtung 8 zu einer Beleimungs-Einrichtung 14 und weiter zu einer dieser nachgeordneten Wellpappe-Streifen-Wende-Einrichtung 15.

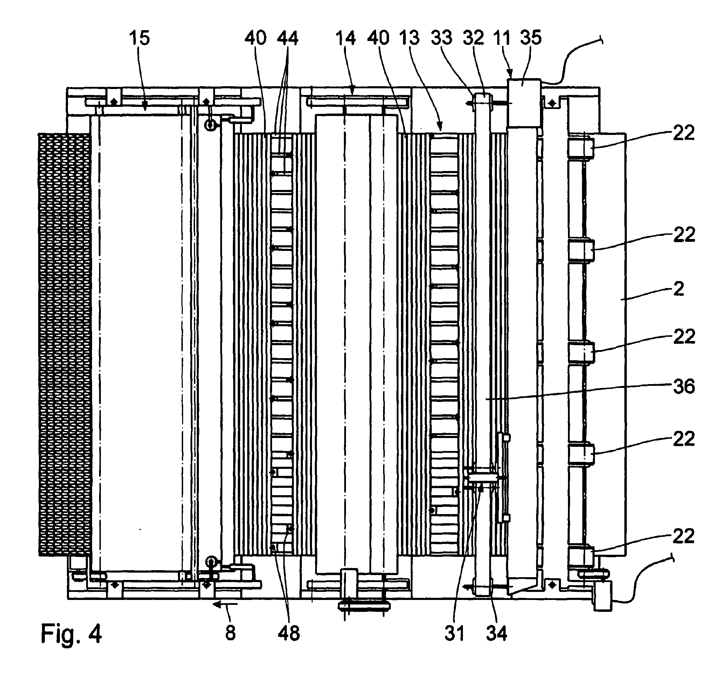

Die Schneid-Einrichtung 11 weist eine Block-Zuführ-Einrichtung 16 auf, bestehend aus einem unteren endlosen Transport-Band 17, das an seinen beiden Enden in und entgegen der Richtung 8 um zwei Umlenk-Walzen 18, 19 umgelenkt ist, wobei die Umlenk-Walze 19 über einen Motor 20 und einen Antriebs-Riemen 21 angetrieben ist. Oberhalb des TransportBandes 17 und parallel zu diesem ist ein weiteres Transport-Band 22 angeordnet, das über Umlenk-Walzen 23 und 24 umgelenkt ist, wobei die Umlenk-Walze 24 über einen Motor 25 durch einen Antriebs-Riemen 26 angetrieben ist. Das obere Transport-Band 22 ist zusammen mit den Umlenk-Walzen 23 und 24 über eine Höhenverstell-Einrichtung 27 in vertikaler Richtung höhenverstellbar, wobei dies beispielsweise durch einen Spindelantrieb möglich ist. Durch die Höhenverstell-Einrichtung 27 kann der zwischen den Transport-Bändern 17 und 22 gebildete Spalt 28 hinsichtlich seiner Höhe verstellt und damit an die Dicke des Blocks 2 angepasst werden. Anstelle sich über die ganze Breite des Blocks 2 erstreckender Transport-Bänder 17, 22 können, wie in Fig. 4 dargestellt, auch mehrere, gleichmäßig über die Breite des Blocks 2 verteilte Bänder 17, 22 verwendet werden.

Die Schneid-Einrichtung 11 weist oberhalb der Block-Zuführ-Einrichtung 16 einen gegenüber einem Maschinen-Gestell abgestützten, horizontalen, senkrecht zur Richtung 8 verlaufenden Querträger 29 auf, der über eine Höhenverstell-Einrichtung 30 höhenverstellbar ist. An dem Querträger 29 ist ein Schlitten 31 quer zur Richtung 8 verschiebbar geführt. Die Querverschiebung erfolgt über einen endlosen Zahngurt 32, der an den Querenden über zwei Rollen 33, 34 umgelenkt ist. Die Rolle 33 ist über einen Motor 35 drehantreibbar. Der Schlitten 31 ist mit dem oberen Teil 36 des Zahngurtes 32 fest verbunden, so dass eine Verschwenkung der Rolle 33 zu einer Querverschiebung des Schlittens 31 führt. Am unteren Teil des Schlittens 31 weist dieser eine an diesem drehbar gelagerte Welle 37 auf. An ihrem in Richtung 8 weisenden Ende trägt die Welle 37 eine Rolle 38, um die der untere Teil des Zahngurtes 32 geführt ist. An dem anderen Ende trägt die Welle ein Kreismesser 39. Oberhalb der Rolle 38 sind an dem Schlitten 31 zwei weitere Umlenk-Rollen für den Zahngurt 32 angeordnet, die nicht dargestellt sind. Alle Rollen 32, 34, 38 weisen zahnförmige Vertiefungen auf, die in die Zähne des Zahngurtes 32 eingreifen, so dass eine schlupffreie Abwicklung stattfinden kann. Das drehangetriebene Kreismesser 39 schneidet aus dem Block 2 Streifen 12.

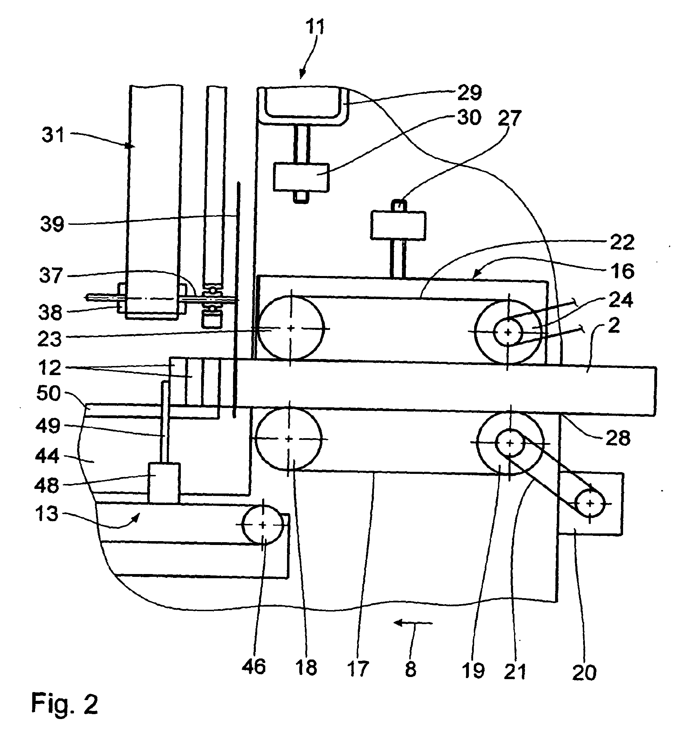

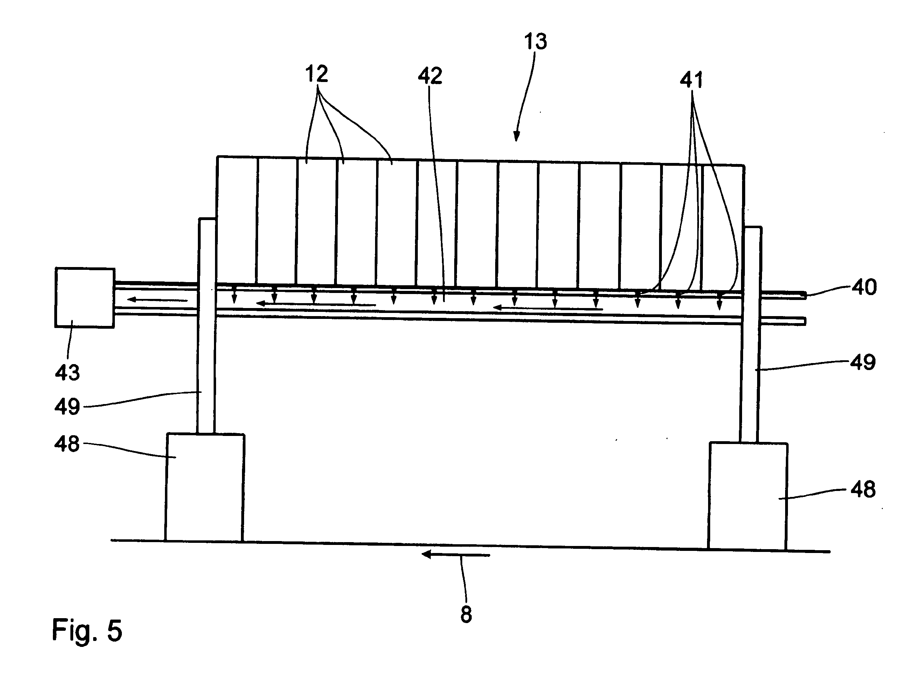

In Richtung 8 hinter der Block-Zuführ-Einrichtung 16 beginnt die Transport-Einrichtung 13. Diese weist einen gegenüber dem Boden über Stützen abgestützten Arbeitstisch 40 auf, der sich bis zur Einrichtung 15 erstreckt. In dem Arbeitstisch 40 sind zahlreiche parallel zur Richtung 8 verlaufende Reihen von Bohrungen 41 vorgesehen, die zu darunter befindlichen Vakuum-Kanälen 42 führen und zur Oberseite des Arbeitstisches 40 hin offen sind. Die Kanäle 42 sind alle mit einer Vakuum-Erzeugungs-Einrichtung 43 verbunden. Durch den Unterdruck am freien Ende der Bohrungen 41 werden darüber hinweg geführte Streifen 12 präzise auf dem Arbeitstisch gehalten. Unter dem Arbeitstisch 40 befinden sich zahlreiche nebeneinander angeordnete, parallel zueinander verlaufende, Transport-Bänder 44, die über Umlenk-Rollen 45, 46 umgelenkt sind, wobei die Rolle 45 über einen Motor 47 angetrieben ist. Wie in Fig. 4 ersichtlich, existieren quer zur Richtung 8 zahlreiche, beispielsweise 20, parallel zueinander verlaufende Transport-Bänder 44. Diese sind in Fig. 4 nur sichtbar, weil der Arbeitstisch an den entsprechenden Stellen aufgebrochen dargestellt ist. Die nebeneinander angeordneten Transport-Bänder 44 sind unabhängig voneinander antreibbar. Jedes Transport-Band 44 trägt mindestens einen Schlitten 48. Jeder Schlitten 48 verfügt über einen nach oben z. B. pneumatisch gesteuert ausschiebbaren Stift 49. Oberhalb der Transport-Bänder 44 weist der Arbeitstisch 40 parallel zur Richtung 8 verlaufende durchgehende Längsnuten 50 auf, in denen die ausgefahrenen Stifte 49 entlang der Richtung 8 verschiebbar sind. Die Stifte 49 sind so dimensioniert, dass sie im eingefahrenen Zustand unterhalb des Arbeitstisches 40 liegen und sich im ausgefahrenen Zustand oberhalb der Oberseite des Arbeitstisches 40, beispielsweise mehrere Zentimeter darüber befinden, so dass sie zum Transport der Streifen 12 verwendet werden können. Alle Transport-Bänder 44 sind zusammen mit den Schlitten 48 über zwei Höhenverstell-Einrichtungen 51, 52, die sich unterhalb der Bänder 44 an einem die Bänder 44 und Rollen 45, 46 tragenden Gestell 53 befinden, höhenverstellbar. Bei den Fig. 1 bis 7 sind die Schlitten 48 alle in derselben Zeichen-Ebene dargestellt, als säßen sie auf demselben Transport-Band 44. Dies ist eine grafische Vereinfachung. Tatsächlich sitzen die Schlitten 48 jeweils auf verschiedenen, hintereinander angeordneten Transport-Bändern 44, die unabhängig voneinander ansteuerbar sind.

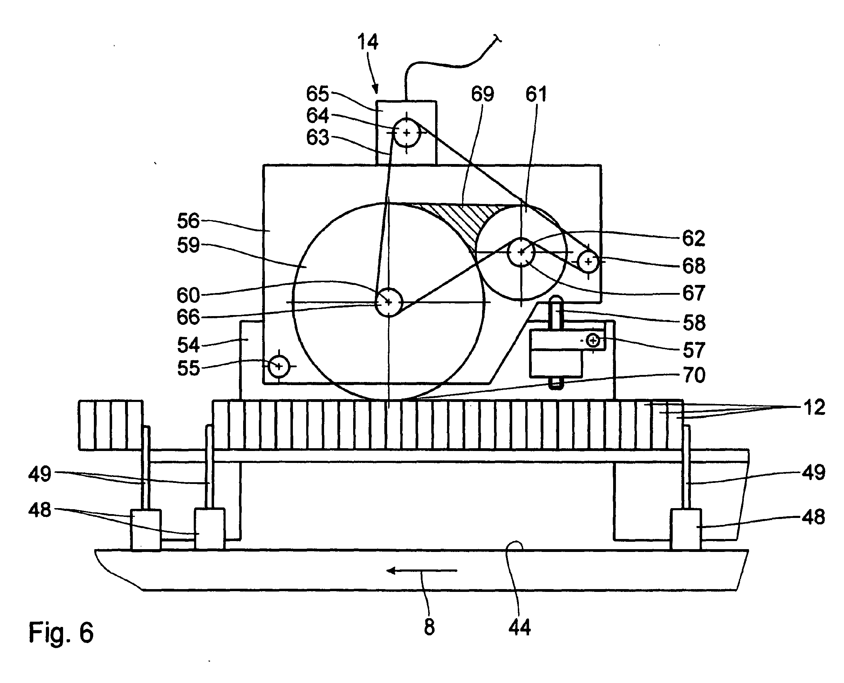

Die Beleimungs-Einrichtung 14 weist ein gegenüber dem Boden abgestütztes Gestell 54 auf. An diesem und oberhalb desselben ist über ein Gelenk 55 eine obere Trag-Einrichtung 56 angelenkt. Das Gelenk 55 befindet sich am in Richtung 8 gelegenen Ende der Trag-Einrichtung 56. Am entgegen der Richtung 8 liegenden Ende ist am Gestell 55 eine Höhenverstell-Einrichtung 57 angeordnet, die über einen oder mehrere vertikal ausfahrbare Stifte 58 die Einrichtung 56 um das Gelenk 55 verschwenken kann. In der Trag-Einrichtung 56 ist eine Leim-Auftrag-Walze 59, deren Achse 60 horizontal und senkrecht zur Richtung 8 verläuft, drehantreibbar gelagert. In Fig. 6 rechts oberhalb der Walze 59 befindet sich eine ebenfalls drehbar gelagerte Abquetsch-Walze 61 mit einer Achse 62, die parallel zur Achse 60 verläuft. Die Oberfläche der Walze 61 befindet sich in unmittelbarem Kontakt mit der Oberfläche der Walze 59, wobei der Spalt zwischen beiden einstellbar ist, um eine Leimmenge auf der Walze 59 zu dosieren. Die Walzen 59 und 61 sind über einen Antriebs-Gurt 63 drehantreibbar, der um die Welle 64 eines Motors 65, um eine Welle 66 der Walze 59, eine Welle 67 der Walze 61 und eine Umlenk-Rolle 68 geführt ist. Zwischen den Walzen 59 und 61 wird oberhalb von diesen ein im Wesentlichen dreieckförmiger Raum 69 gebildet, der mit Leim gefüllt ist. Quer zur Richtung 8 wird der Raum 69 auf beiden Seiten durch nicht dargestellte Leimdämme begrenzt, deren Kontur der der Walzen 59 und 61 in dem dreieckförmigen Raum angepasst ist. Die Leimdämme können quer zur Transportrichtung verschiebbar sein. Durch die Höhenverstell-Einrichtung 57 ist der Spalt 70 zwischen dem untersten Punkt der Walze 59 und der Oberseite der Streifen 12 einstellbar, so dass eine optimale Beleimung der Oberseite der Streifen 12 gewährleistet ist.

Die Wellpappe-Streifen-Wende-Einrichtung 15 weist eine gegenüber einem Gestell 71 abgestützte, drehantreibbar gelagerte Wende-Walze 72 mit einer Achse 73 auf. Die Walze 72 ist über einen Antriebs-Riemen 74 über einen Motor 75 drehantreibbar. Die Wende-Walze 72 weist mehrere gleichmäßig über die Breite der Walze 72 verteilte, voneinander beabstandete Ringe 76 auf, die mit dem Mantel 77 der Walze 72 fest verbunden sind. In die Ringe 76 sind parallel zur Achse 73 verlaufende Stege 78 in entsprechende Nuten 79 eingesetzt und mit dem jeweiligen Ring 76 fest verbunden, beispielsweise verschraubt, verklebt oder verschweißt. Ein Vorteil ist, wenn die Stege 78 auswechselbar befestigt sind. Im vorliegenden Fall sind pro Ring 76 drei gleichmäßig über den Umfang verteilte, d. h. um 120° zueinander versetzte Stege 78 angeordnet. Die Stege 78 auf den verschiedenen Ringen 76 befinden sich alle auf derselben angularen Höhe, d. h. sie fluchten miteinander in Richtung der Achse 73. Die Stege 78 tragen zahlreiche nach außen vorstehende Nadeln 80. Die Nadeln 80 sind beispielsweise auf einer Matrix von 2 x 15 angeordnet. Die Nadeln 80 sind aus Stahl und an ihrem radialen äußeren Ende spitz. Typischerweise stehen die Nadeln um 3 mm bis 10 mm, bevorzugt 5 mm gegenüber der Oberseite des Stegs 78 hervor. Die Nadeln 80 weisen bezogen auf eine Dreh-Richtung 81 nicht exakt radial nach außen, sondern entgegen der Dreh-Richtung 81. Sie schließen also mit einem Radius durch die Achse 73 einen Winkel b ein, für den gilt: 70° ≤ b ≤ 110°, bevorzugt b ≈ 80°. Dies erleichtert das Abstreifen der aufgespießten Streifen 12. In Fig. 1 rechts oberhalb der Walze 76 befindet sich ein horizontal verlaufender, sich über die Breite der Walze 76 erstreckender Balken 82, der an seinem vorderen, in Richtung 8 liegenden Ende eine verbreiterte Fläche 83 besitzt. Der Balken 82 ist durch eine entgegen der Richtung 8 angeordnete Pneumatik-Einrichtung 84 entlang und entgegen der Richtung 8 gesteuert verschiebbar. In Richtung 8 unmittelbar oberhalb der Walze 72 und hinter deren höchstem Punkt befmdet sich eine, sich über die Breite der Walze 72 erstreckende Abstreif-Platte 85. Die Platte 85 weist entgegen der Richtung 8 eine vordere Abstreif-Kante 86 auf, die durch rechteckige Rücksprünge 87 unterbrochen ist. Die Rücksprünge 87 befinden sich bezogen auf die Achsrichtung 73 an den Stellen, an denen die Walze 72 die Ringe 76 mit den Nadeln 80 trägt. Auf diese Weise kann die Abstreif-Kante 86 möglichst nah an der Oberseite der Walze 72 angeordnet sein, ohne dass es zu einer Kollision mit den Nadeln 80 kommt. Oberhalb der Abstreif-Platte 85 befindet sich, wie in Fig. 1 dargestellt, eine Niederhalte-Einrichtung 88 zum Niederhalten der von den Nadeln 80 abgestreiften Streifen 12. Diese weist eine an einem Gelenk 89 angelenkte Platte 90 auf, die an ihrem entgegen der Richtung 8 gelegenen Ende durch Pneumatik-Zylinder 91 höhenverstellbar ist, so dass der Neigungswinkel der Platte 90 einstellbar ist. In Richtung 8 unmittelbar hinter der Abstreif-Platte 85 befindet sich ein endloses, angetriebenes, um zwei Umlenk-Walzen 92, 93 umgelenktes Transport-Band 94. Die Walze 92 ist über einen Motor 95 drehangetrieben. Oberhalb des TransportBandes 94 befindet sich ein zweites, parallel dazu angeordnetes Transport-Band 96, das um Umlenk-Walzen 97, 98 umgelenkt ist, wobei die Walze 97 durch einen Motor 99 angetrieben ist. Zwischen den Transport-Bändern 94 und 96 ist ein Spalt 100 gebildet, in dem die erzeugte Waben-Wellpappe 1 in Richtung 8 abtransportiert wird. Das Transport-Band 96 sowie die Umlenk-Walzen 97 und 98 sind an einem gemeinsamen Gestell 101 befestigt, das über Höhenverstell-Einrichtungen 102, 103 höhenverstellbar ist. Auf diese Weise ist die Breite des Spalts 100 einstellbar und an die jeweilige Dicke der Waben-Wellpappe 1 anpassbar.

In Richtung 8 befindet sich hinter der Einrichtung 15 eine nicht dargestellte Schneid-Einrichtung zum Erzeugen von Bögen aus Waben-Wellpappe 1, wie dies allgemein aus Wellpappe-Anlagen, beispielsweise aus der DE 103 12 600 A1, bekannt ist. Die Bögen werden in einer nicht dargestellten Stapel-Einrichtung gestapelt.

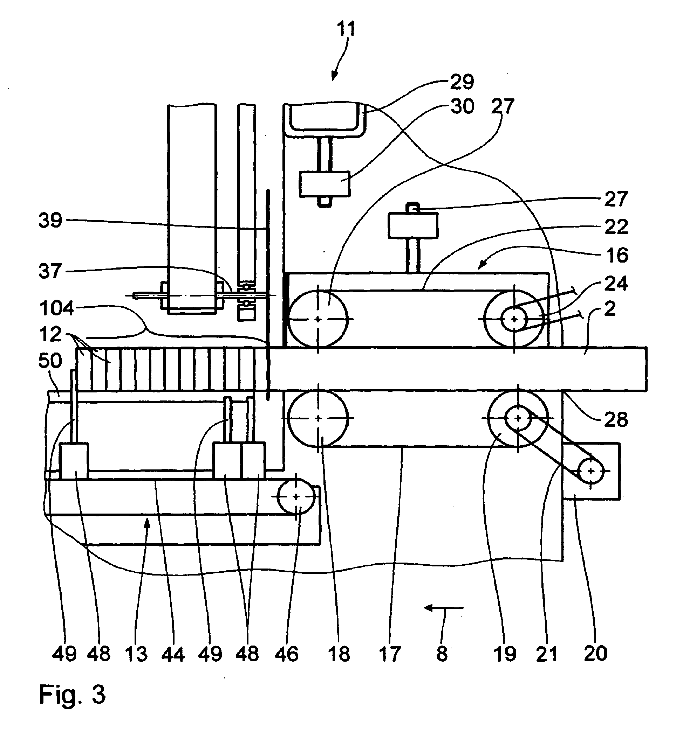

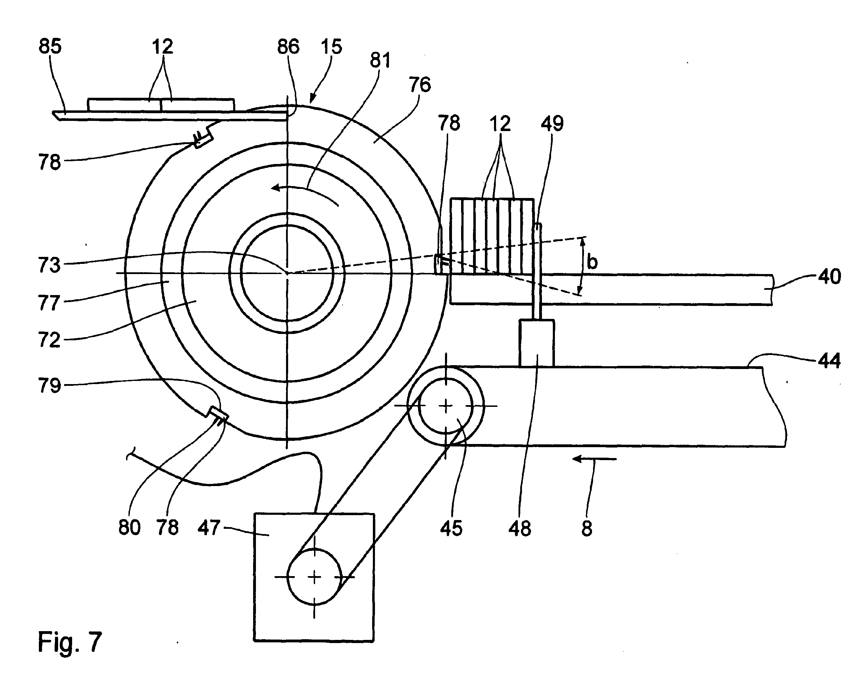

Im Folgenden wird die Funktionsweise der Vorrichtung zur Erzeugung von Waben-Wellpappe 1 beschrieben. Der Block-Zuführ-Einrichtung 16 wird ein Block 2 miteinander verklebter Wellpappe-Bögen zugeführt, wobei vorteilhafterweise die oberste Bahn des Blocks 2 eine Wellbahn 3 und die unterste Bahn des Blocks 2 eine Deckbahn 4 ist. Die Kanäle 7 in dem Block 2 verlaufen alle parallel zueinander, horizontal und entlang der Richtung 8. Die Transport-Bänder 17 und 22 transportieren den Block 2 schlupffrei entlang der Richtung 8, können den Block 2 aber auch entgegen der Richtung 8 verschieben. Sobald die in Richtung 8 gelegene Vorderkante des Blocks 2 die Höhe des Kreismessers 39 erreicht, werden mehrere Stifte 49 gleichmäßig über die Breite des Arbeitstisches 40 verteilt ausgefahren und liegen an der Vorderseite des Blocks 2 an. Anschließend werden durch das Kreismesser 39 Streifen 12 aus dem Block 2 geschnitten, wobei nach jedem Schnitt der Block 2 durch die Bänder 17, 22 um einen bestimmten Weg vorgeschoben wird und die ausgefahrenen Stifte 49, die an der Vorderseite des Blocks 2 anliegen, entsprechend folgen. Nach der Beendigung des jeweiligen Vorschubs wird ein weiterer Schnitt durch das Kreismesser 39 durchgeführt, wodurch ein weiterer Streifen entsteht. Nach einer bestimmten Zahl von Schnitten, beispielsweise 20 Schnitten, wird der Block 2 durch die Bänder 17, 22 entgegen der Richtung 8 zurückgefahren. Im Anschluss daran werden Stifte 49 von zugehörigen Schlitten 48 unmittelbar hinter der hintersten Scheibe 12 ausgefahren, so dass die Gruppe nebeneinander befindlicher Streifen 12 durch Stifte in und entgegen der Richtung 8 begrenzt wird, wie dies beispielsweise in Fig. 3 dargestellt ist. Der so gebildete Cluster 104 von nebeneinander liegenden Streifen 12 wird nun durch die Synchronbewegung der zugehörigen Schlitten 48 entlang der Richtung 8 bewegt. Der Cluster 104 wird unter der Leim-Auftrags-Walze 59 hindurchgeführt, die die oberen Spitzen der obersten Wellbahn 3 beleimt. Vorteilhaft bei der Beleimung der Spitzen der Wellbahn 3 ist, dass weniger Leim verwendet werden muss, als wenn die Deckbahnen 4 beleimt würden. Durch die Beleimung der Spitzen der Wellbahnen 3 wird Leim nur dort aufgebracht, wo er später erforderlich ist. Der Leim gelangt dabei aus dem Raum 69 durch den Spalt zwischen den Walzen 59 und 61 zu dem Beleimungs-Spalt 70. Anschließend wird der Cluster 104 in Richtung 8 zu der Wellpappe-Streifen-Wende-Einrichtung 15 transportiert. Die Walze 72 befindet sich in der in Fig. 7 dargestellten Position, d. h. die Nadeln 80 befinden sich unmittelbar oberhalb des Arbeitstisches 40. Der in Richtung 8 vorderste Streifen 12 wird durch die ausgefahrenen Stifte 49 am hinteren Ende des Clusters 104 auf die Nadeln 80 geschoben. Vorher wurden die Stifte 49, die dem Cluster 104 am vorderen Ende begrenzten, eingefahren. Sollte die durch die Stifte 49 am hinteren Ende des Clusters 104 aufbringbare Aufschiebkraft zum Aufschieben eines Streifens 12 auf die Nadeln 80 nicht ausreichen, so können auch die hinteren Stifte 49 eingefahren werden. An deren Stelle käme dann ein nicht dargestellter Balken zum Einsatz, der den Cluster 104 über die volle Breite der Walze 72 auf die Nadeln 80 schiebt. Nach dem erfolgten Aufschieben eines Streifens 12 auf die Nadeln 80 wird die Walze 72 entlang der Dreh-Richtung 81 gedreht, bis der aufgespießte Streifen 12 in Kontakt mit der Abstreif-Kante 86 kommt, die den Streifen 12 von den Nadeln 80 zieht. Die in Eingriff befindlichen Nadeln 80 werden durch den Rücksprung 87 hindurchgedreht und außer Eingriff mit dem Streifen 12 gebracht. Anschließend wird der nun um 90° gewendete Streifen 12 durch den Balken 82 in Richtung 8 auf der Platte 85 verschoben und an den davor befindlichen Streifen 12 gedrückt und mit diesem verklebt. Hierdurch entsteht eine theoretisch endlose Bahn von Waben-Wellpappe 1. In Fig. 10 sind zwei Streifen 12 des Blocks 2 miteinander verklebt dargestellt. Die erzeugte Waben-Wellpappe 1 wird durch die Transport-Bänder 94 und 96 in Richtung 8 abtransportiert, später in Bögen geschnitten und gestapelt.

Wie bereits eingangs erläutert, hat die Waben-Wellpappe 1 zahlreiche vorteilhafte Eigenschaften. Sie besitzt eine große Stabilität gegenüber Kräften senkrecht zur Ebene 10. Die Waben-Wellpappe 1 kann als Dämmstoff, Baustoff etc. verwendet werden. Sie besitzt ein bezogen auf das eingenommene Außenvolumen sehr niedriges Gewicht.

## Patentansprüche

1. Vorrichtung zur Änderung der Raumorientierung eines Wellpappe-Streifens (12) mit
a. einer Zuführ-Einrichtung (13) zum Zuführen von Streifen (12) aus Wellpappe,
b. einer entlang einer Dreh-Richtung (81) drehantreibbar gelagerten Wende-Walze (72) mit einem Mantel (77),
c. mit mindestens einer auf dem Mantel (77) der Wende-Walze (72) angeordneten Aufnahme-Einrichtung zur lösbaren Befestigung mindestens eines Steifens (12) auf dem Mantel (77), und
d. einer in Dreh-Richtung (81) nachgeordneten Abstreif-Einrichtung (85, 86) zum Ablösen der Streifen (12) von dem Mantel (77).

2. Vorrichtung gemäß Anspruch 1, **dadurch gekennzeichnet, dass** die Aufnahme-Einrichtung nach außen vorstehende Nadeln (80) aufweist.

3. Vorrichtung gemäß Anspruch 2, **dadurch gekennzeichnet, dass** die Nadeln (80) in Form einer Matrix angeordnet sind.

4. Vorrichtung gemäß Anspruch 2 oder 3, **dadurch gekennzeichnet, dass** die Nadeln (80) mit einem Radius der Wende-Walze (72) einen Winkel b einschließen für den gilt: 70° ≤ b ≤ 110°, insbesondere b ≈ 80°.

5. Vorrichtung gemäß Anspruch 4, **dadurch gekennzeichnet, dass** die Nadeln (80) entgegen der Dreh-Richtung (81) geneigt sind.

6. Vorrichtung gemäß einem der Ansprüche 2 bis 5, **dadurch gekennzeichnet, dass** die Nadeln (80) auf einem auswechselbaren Steg (78) angeordnet sind.

7. Vorrichtung gemäß Anspruch 6, **dadurch gekennzeichnet, dass** bezogen auf einen Querschnitt der Wende-Walze (72) mehrere, gleichmäßig über den Umfang verteilte Stege (78) vorgesehen sind.

8. Vorrichtung gemäß Anspruch 6 oder 7, **dadurch gekennzeichnet, dass** die Stege (78) auf einem Ring (76) angeordnet sind, der auf dem Mantel (77) befestigt ist.

9. Vorrichtung gemäß Anspruch 8, **dadurch gekennzeichnet, dass** mehrere, über die Breite der Wende-Walze (72) verteilte Ringe (76) vorgesehen sind.

10. Vorrichtung gemäß Anspruch 8 oder 9, **dadurch gekennzeichnet, dass** die Abstreif-Einrichtung (85, 86) im Bereich der Ringe (76) Rücksprünge (87) aufweist.

## Claims

1. Device for changing the spatial orientation of a corrugated-cardboard strip (12), the device comprising
a. a supply device (13) for supplying strips (12) of corrugated cardboard,
b. a turning roller (72) comprising a cylindrical surface (77), the turning roller (72) being mounted for rotary drive in a direction of rotation (81),
c. at least one accommodation means disposed on the cylindrical surface (77) of the turning roller (72) for detachably fastening at least one strip (12) on the cylindrical surface (77), and
d. a stripping device (85, 86) disposed downstream in a direction of rotation (81) for stripping the strips (12) off the cylindrical surface (77).

2. Device according to claim 1, **characterized in that** the accommodation means comprises outwardly projecting needles (80).

3. Device according to claim 2, **characterized in that** the needles (80) are arranged in the shape of a matrix.

4. Device according to claim 2 or 3, **characterized in that** the needles (80) make an angle b with a radius of the turning roller (72), wherein to said angle b applies 70° ≤ b ≤ 110°, in particular b ≈ 80°.

5. Device according to claim 4, **characterized in that** the needles (80) are inclined opposite to the direction of rotation (81).

6. Device according to one of claims 2 to 5, **characterized in that** the needles (80) are arranged on a replaceable rib (78).

7. Device according to claim 6, **characterized in that** relative to a cross-section of the turning roller (72), several ribs (78) are provided which are uniformly distributed across the periphery.

8. Device according to claim 6 or 7, **characterized in that** the ribs (78) are arranged on a ring (76) which is fastened to the cylindrical surface (77).

9. Device according to claim 8, **characterized in that** several rings (76) are provided which are distributed across the width of the turning roller (72).

10. Device according to claim 8 or 9, **characterized in that** the stripping device (85, 86) comprises recesses (87) in the vicinity of the rings (76).

## Revendications

1. Dispositif de changement d'orientation spatiale d'une bande de carton ondulé (12) comprenant
a. un dispositif d'alimentation (13) pour alimenter des bandes (12) de carton ondulé,
b. un cylindre de réorientation (72) muni d'une enveloppe (77) et monté de façon à pouvoir être entraîné en rotation le long d'une direction de rotation (81),
c. au moins un dispositif de réception disposé sur l'enveloppe (77) du cylindre de réorientation (72) pour la fixation amovible d'au moins une bande (12) sur l'enveloppe (77), et
d. un dispositif racleur (85, 86) placé en aval dans la direction de rotation (81) pour détacher les bandes (12) de l'enveloppe (77).

2. Dispositif selon la revendication 1, **caractérisé en ce que** le dispositif de réception présente des aiguilles (80) faisant saillie vers l'extérieur.

3. Dispositif selon la revendication 2, **caractérisé en ce que** les aiguilles (80) sont disposées sous la forme d'une matrice.

4. Dispositif selon la revendication 2 ou 3, **caractérisé en ce que** les aiguilles (80) forment avec un rayon du cylindre de réorientation (72) un angle b pour lequel s'applique : 70° ≤ b ≤ 110°, en particulier b ≈ 80°.

5. Dispositif selon la revendication 5, **caractérisé en ce que** les aiguilles (80) sont inclinées dans une direction opposée à la direction de rotation (81).

6. Dispositif selon l'une des revendications 2 à 5, **caractérisé en ce que** les aiguilles (80) sont disposées sur une nervure (78) interchangeable.

7. Dispositif selon la revendication 6, **caractérisé en ce que** sont prévues, par rapport à une section transversale du cylindre de réorientation (72), plusieurs nervures (78) uniformément réparties sur la périphérie.

8. Dispositif selon la revendication 6 ou 7, **caractérisé en ce que** les nervures (78) sont disposées sur un anneau (76) qui est fixé sur l'enveloppe (77).

9. Dispositif selon la revendication 8, **caractérisé en ce que** sont prévus plusieurs anneaux (76) répartis sur la largeur du cylindre de réorientation (72).

10. Dispositif selon la revendication 8 ou 9, **caractérisé en ce que** le dispositif racleur (85, 86) présente des parties en retrait (87) dans la région des anneaux (76).
